# EUROPÄISCHE PATENTSCHRIFT

(11) **EP 0 702 038 B1**
(45) Veröffentlichungstag und Bekanntmachung des Hinweises auf die Patenterteilung: **28.01.1998**
(21) Anmeldenummer: 95113800.7
(22) Anmeldetag: 02.09.1995
(51) Int. Cl.: C08F 297/08, C08F 210/16, C08F 8/50

(54) **Hochflexible Propylen-Ethylen-Copolymerisate**
Highly flexible propylene-ethylene copolymers
Copolymères propylène-éthylène hautement flexibles

(30) Priorität: 15.09.1994 DE 4432798
(43) Veröffentlichungstag der Anmeldung: 20.03.1996
(73) Patentinhaber: BASF Aktiengesellschaft, 67063 Ludwigshafen (DE)
(72) Erfinder: Müller, Patrik, Dr., D-67661 Kaiserslautern (DE); Kersting, Meinolf, Dr., D-67435 Neustadt (DE)

(56) Entgegenhaltungen:
- EP-A- 0 351 208
- EP-A- 0 355 603
- EP-A- 0 383 099
- EP-A- 0 461 883
- EP-A- 0 518 093

## Beschreibung

Die vorliegende Erfindung betrifft hochflexible Propylen-Ethylen-Copolymerisate mit hohem Kautschukgehalt und einem Schmelzfluß-index (HLMI), gemessen bei 230°C und 21,6 kg, von 0,2 bis 50 g/10 min, erhältlich durch zweistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält, wobei man

in einer ersten Polymerisationsstufe bei einem Druck von 20 bis 27 bar, einer Temperatur von 50 bis 70°C und einer mittleren Verweilzeit des Reaktionsgemisches von 0,5 bis 5 Stunden Propylen polymerisiert und anschließend

in einer zweiten Polymerisationsstufe bei einem Druck von 5 bis 30 bar, wobei dieser Druck wenigstens 2 bar unter dem Druck der ersten Polymerisationsstufe liegt, einer Temperatur von 60 bis 100°C und einer mittleren Verweilzeit des Reaktionsgemisches von 0,5 bis 5 Stunden, dem aus der ersten Polymerisationsstufe ausgebrachten Polymerisat ein Gemisch aus Propylen und Ethylen hinzupolymerisiert, dabei das Verhältnis der Partialdrücke zwischen Propylen und Ethylen im Bereich von 0,5 : 1 bis 5 : 1 einstellt, das Gewichtsverhältnis zwischen den in der ersten und den in der zweiten Polymerisationsstufe umgesetzten Monomeren so bemißt, daß es im Bereich von 0,9 : 1 bis 0,4 : 1 liegt, die Polymerisation in der zweiten Polymerisationsstufe in Gegenwart eines C₁-C₈-Alkanols vornimmt, und in der zweiten Polymerisationsstufe keine zusätzliche, als Cokatalysator dienende Aluminiumverbindung und keine zusätzliche, als Katalysator dienende titanhaltige Feststoffkomponente einbringt.

Außerdem betrifft die vorliegende Erfindung ein Verfahren zur Herstellung dieser Propylen-Ethylen-Copolymerisate sowie Folien, Fasern und Formkörper aus diesen Copolymerisaten.

Durch Polymerisation an Ziegler-Natta-Katalysatoren erhältliche Propylen-Ethylen-Copolymerisate sind bereits in einer Reihe von Patentschriften beschrieben worden. Aus der US-A-4 260 710 ist bekannt, Homo- und Copolymerisate von Alk-1-enen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200, US-A 4 857 613).

Die EP-A 351 208 beschreibt zweistufige Reaktorblends aus einem Propylenpolymerisat und ein Ethylenpolymerisat, die einem peroxidischen Molmassenabbau unterworfen werden. Die so hergestellten Produkte besitzen eine hohe Tieftemperaturschlagzähigkeit bei guter Fließfähigkeit und Steifigkeit.

Des weiteren sind eine Reihe von Verfahren zur Darstellung von Propylen-Ethylen-Blockcopolymerisaten mit Hilfe eines Ziegler-Natta-Katalysatorsystems bekannt (US-A 4 454 299, US-A 4 455 405, GB-B 1 032 945), bei denen man zunächst gasförmiges Propylen in einer ersten Reaktionsstufe polymerisiert und das daraus erhältliche Homopolymerisat anschließend in eine zweite Reaktionsstufe bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit auf.

Die Herstellung von Propylen-Ethylen-Blockcopolymerisaten mit Hilfe eines Ziegler-Natta-Katalysatorsystems wird auch in der EP-A 355 603, der EP-A 131 268 und der DE-A 4 001 157 beschrieben. Dort stellt man zunächst in einer ersten Polymerisationsstufe ein Propylenhomopolymerisat her und polymerisiert diesem anschließend in einer zweiten Polymerisationsstufe ein Gemisch aus Propylen und Ethylen hinzu. Die dabei erhältlichen Polymerisate weisen neben einer hohen Kerbschlagzähigkeit eine günstige Kornverteilung und sehr niedrige Gehalte an unerwünschten Katalysatorresten, insbesondere an Titan und Chlor, auf. Bei diesen Polymerisaten beobachtet man jedoch häufig eine relativ hohe Neigung zum Weißbruch, so daß diese als Materialien für Produkte, bei denen die optische Eigenschaften wichtig werden, nur bedingt brauchbar sind. Unter Weißbruch versteht man dabei die an vielen Kunststoffen während der Verstreckung auftretende Weißfärbung der vorher transparenten Probe in einzelnen Bereichen.

Bei der Herstellung von Propylen-Ethylen-Copolymerisaten nach einem der oben beschriebenen zweistufigen Verfahren ist in der zweiten Polymerisationsstufe nach einigen Stunden häufig eine Belagbildung an der Reaktorwand feststellbar. Diese Belagbildung erschwert die Temperatur- und Reaktionssteuerung bei der Copolymerisation. Dies hat zur Folge, daß die Reaktorlaufzeiten verkürzt werden müssen, um in jedem Fall einen kontrollierten Reaktionsablauf gewährleisten zu können. Kürzere Reaktorlaufzeiten wiederum bewirken eine Erhöhung der Rüstzeiten und damit der Produktionskosten, so daß die Belagbildung die Wirtschaftlichkeit der Herstellung derartiger Propylen-Ethylen-Copolymerisate beeinträchtigt.

Aus der DE-A 4 119 345 ist ebenfalls ein zweistufiges Verfahren zur Herstellung von Propylen-Ethylen-Copolymerisaten bekannt, bei welchem die Belagbildung deutlich reduziert ist. Die daraus erhaltenen Propylen-Ethylen-Copolymerisate zeichnen sich u.a. durch eine hohe Schlagzähigkeit bei zugleich verringerter Neigung zum Weißbruch auf. Für einige Anwendungszwecke ist es aber notwendig, die bereits günstigen Werte der aus der DE-A 4 119 345 bekannten Copolymerisate in bezug auf Schlagzähigkeit und Neigung zum Weißbruch nochmals zu verbessern, um auf diese Weise die Einsatzmöglichkeiten derartiger Copolymerisate, beispielsweise als Weichfolien im Kraftfahrzeugbereich oder als hochflexible Verschlußdeckel zu erweitern.

Der vorliegenden Erfindung lag daher die Aufgabe zugrunde, den geschilderten Nachteilen abzuhelfen und Propylen-Ethylen-Copolymerisate mit einer sehr hohen Schlagzähigkeit und einer stark verringerten Neigung zum Weißbruch herzustellen und darüber hinaus die bei der Herstellung derartiger Copolymerisate häufig auftretende Belagbildung zu unterdrücken.

Demgemäß wurden die eingangs definierten neuen, hochflexiblen Propylen-Ethylen-Copolymerisate gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkessel einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate gut bewährt haben. Als besonders bevorzugter Träger werden Silicium- und Aluminiumoxide, sowie Aluminiumsilikate der Formel SiO₂ · aAl₂O₃ verwendet, wobei a für einen Wert von 0,001 bis 2, insbesondere von 0,001 bis 0,5 steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten, wobei das Halogen vorzugsweise in Form eines Halogenierungsmittels oder aber in molekularer Form in die titanhaltige Feststoffkomponente eingebracht wird.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphorund siliciumorganische Verbindungen. Bevorzugt werden als Elektronendonorverbindungen innerhalb der titanhaltigen Feststoffkomponenten Phthalsäurederivate der allgemeinen Formel I 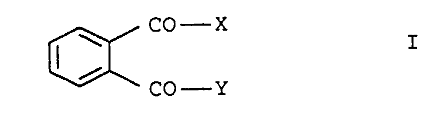 verwendet, wobei X und Y jeweils für ein Chloratom oder einen C₁-bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propoxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt Siliciumoxid oder ein Aluminiumsilikat der Formel SiO₂ · aAl₂O₃ - wobei a für eine Zahl im Bereich von 0,001 bis 2, insbesondere im Bereich von 0,01 bis 0,5 steht - der in der Regel einen Teilchendurchmesser von 0,01 bis 1000 µm, insbesondere von 10 bis 300 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

R¹ ₙSi (OR²)₄₋ₙ II

wobei
R¹ gleich oder verschieden ist und für eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe steht, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ gleich oder verschieden ist und eine C₁-bis C₈-Alkylgruppe oder eine 5- bis 7-gliedrige Cycloalkylgruppe, sowie R² gleich oder verschieden ist und eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsek.butylsilan, Dimethoxyisopropylsek.butylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10 : 1 bis 800 : 1, insbesondere 20 : 1 bis 200 : 1, und das Molverhältnis zwischen der Aluminiumverbindung und der als Cokatalysator eingesetzten Elektronendonorverbindung 1 : 1 bis 100 : 1, insbesondere 2 : 1 bis 80 : 1 beträgt.

Die Polymerisation des Propylens wird in der ersten Polymerisationsstufe bei einem Druck von 20 bis 27 bar, einer Temperatur von 50 bis 70°C und einer mittleren Verweilzeit des Reaktionsgemisches von 0,5 bis 5 Stunden durchgeführt. Bevorzugt sind dabei Drücke von 24 bis 27 bar, Temperaturen von 60 bis 70°C und mittlere Verweilzeiten von 1,0 bis 4 Stunden. In einer bevorzugten Verfahrensausführung wählt man die Reaktionsbedingungen so, daß in der ersten Polymerisationsstufe pro mmol der Aluminiumkomponente 0,05 bis 2 kg, bevorzugt 0,1 is 1,5 kg, Polypropylen gebildet werden.

Dieses Polypropylen wird nach Beendigung der Reaktion mit dem Katalysator aus der ersten Polymerisationsstufe ausgetragen und in die zweiten Polymerisationsstufe eingeführt, wo diesem ein Gemisch von Propylen und Ethylen hinzupolymerisiert wird. Der in der zweiten Polymerisationsstufe vorherrschende Druck liegt 2, bevorzugt 7 bar, unter dem der ersten Polymerisationsstufe und beträgt 5 bis 30, vorzugsweise 10 bis 25 bar. Die mittlere Verweilzeit des Polymerisats beträgt 0,5 bis 5 Stunden, bevorzugt 1,0 bis 4 Stunden. In der zweiten Polymerisationsstufe liegt das Verhältnis der Partialdrücke zwischen Propylen und Ethylen im Bereich von 0,5 : 1 bis 5 : 1, insbesondere im Bereich von 1 : 1 bis 5 : 1.

Erfindungsgemäß wird die Polymerisation in der zweiten Polymerisationsstufe bei einer Temperatur von 60 bis 100°C, insbesondere von 70 bis 90°C und in Gegenwart eines C₁-C₈-Alkanols durchgeführt. Bevorzugt wird dabei ein C₁-C₄-Alkanol verwendet, insbesondere u.a. Methanol, Ethanol, n-Propanol, n-Butanol und ganz besonders Isopropanol. Die hinzugefügten C₁-C₈-Alkanole beeinflussen dabei die Aktivität des Ziegler-Natta-Katalysators und reduzieren die Belagbildung an der Reaktorwand. Die Menge des hinzugefügten C₁-C₈-Alkanols wird dabei zweckmäßigerweise so bemessen, daß das Molverhältnis zwischen der Aluminiumverbindung und dem C₁-C₈-Alkanol 0,1 : 1 bis 10 : 1, insbesondere 0,2 : 1 bis 5 : 1 beträgt.

Bei der Durchführung des zu den erfindungsgemäßen Propylen-Ethylen-Copolymerisaten führenden Verfahrens muß weiterhin darauf geachtet werden, daß das Gewichtsverhältnis zwischen den in der ersten und den in der zweiten Polymerisationsstufe umgesetzten Monomeren auf Werte von 0,9 : 1 bis 0,4 : 1, insbesondere auf 0,8 : 1 bis 0,5 : 1 eingestellt wird. Auf diese Weise erhält man Propylen-Ethylen-Copolymerisate, die sich u.a. durch einen hohen Kautschukgehalt, d.h. durch einen hohen Anteil von, in Xylol löslichen Propylen-Ethylen-Copolymerisaten auszeichnen.

Das Molekulargewicht der erfindungsgemäßen Propylen-Ethylen-Copolymerisate kann wie üblich durch Zugabe von Reglern, insbesondere von Wasserstoff kontrolliert werden.

Es ist auch möglich, die erfindungsgemäßen Propylen-Ethylen-Copolymerisate nach dem Austrag aus der zweiten Polymerisationsstufe einen peroxidischen Molmassenabbau zu unterwerfen. Dieser Molmassenabbau kann in üblichen Mischapparaturen erfolgen, beispielsweise in Knetern, Walzen, Mischern oder Extrudern, wobei letztere bevorzugt verwendet werden. Besonders bevorzugt sind dabei sogenannte Zweischneckenextruder.

Der peroxidische Molmassenabbau wird üblicherweise bei Temperaturen von 170 bis 300°C, insbesondere bei Temperaturen von 200 bis 250°C, Drücken von 3 bis 30 bar, insbesonders bei Drücken von 5 bis 25 bar und mittleren Verweilzeiten von 0,3 bis 5 Minuten, insbesondere von 0,5 bis 2 Minuten durchgeführt.

Der peroxidische Molmassenabbau wird vorzugsweise in der Weise durchgeführt, daß man eine peroxidische Verbindung entweder in Form einer Lösung in einem inerten Lösungsmittel, beispielsweise in n-Hexan oder in Form eines sogenannten "Peroxidbatches", d.h. als Mischung einer peroxidischen Verbindung mit einem Polyolefin, insbesondere mit einem Propylenhomo- oder -copolymerisat, in den Einzug des Extruders dosiert, in welchem man auch das abzubauende, erfindungsgemäße Propylen-Ethylen-Copolymerisat einspeist und danach unter den oben angegebenen Bedingungen peroxidisch abbaut. Vorzugsweise erfolgt der peroxidische Molmassenabbau bis zu einem Schmelzflußindex von mindestens 0,5g/10 min., bei 230°C und einem Gewicht von 2,16 kg, nach DIN 53 735.

Als peroxidische Verbindungen werden bevorzugt solche organischen Peroxide verwendet, die bei einer Temperatur von 210°C Halbwertszeiten von 1 bis 30 Sekunden aufweisen. Innerhalb dieser Verbindungen sind insbesondere Dicumylperoxid, Monocumyl(tert.butyl)-peroxid, Di(tert.butyl)peroxid, 2,5-Dimethyl-2,5-di(tert.butylperoxy)hexan, 2,5-Dimethyl-2,5-di(tert.butyl)peroxid und 2,5-Dimethyl-2,5-di(tert.butylperoxy)hex-3-in hervorzuheben. Derartige peroxidische Verbindungen sind im Handel erhältlich.

Die peroxidische Verbindung wird dabei vorzugsweise in einer Menge von 0,0001 bis 1,0 Gew.-Teilen, insbesondere von 0,001 bis 0,5 Gew.-Teilen, bezogen auf 100 Gew.-Teile des erfindungsgemäßen Propylen-Ethylen-Copolymerisats verwendet.

Die erfindungsgemäßen hochflexiblen Propylen-Ethylen-Copolymerisate weisen mittlere Molmassen (Gewichtsmittel) von 10 000 bis 1000000 und Schmelzflußindices (HLMI) von 0,2 bis 50 g/10 min auf, jeweils gemessen nach DIN 53 735 bei 230°C und 21,6 kg. Der Schmelzflußindex (HLMI) entspricht in diesem Fall der Menge an Polymerisat, die innerhalb von 10 Minuten aus der nach DIN 53 735 genormten Prüfvorrichtung bei einer Temperatur von 230°C und unter einem Gewicht von 21,6 kg ausgepreßt wird. Die erfindungsgemäßen hochflexiblen Propylen-Ethylen-Copolymerisate weisen neben einer sehr guten Kerbschlagzähigkeit insbesondere auch eine, gegenüber den bisher bekannten Propylen-Ethylen-Copolymerisaten stark verringerte Neigung zum Weißbruch auf. Bei der Herstellung der erfindungsgemäßen hochflexiblen Propylen-Ethylen-Copolymerisate ist die Belagbildung in der zweiten Polymerisationsstufe deutlich weniger ausgeprägt, so daß das Verfahren erheblich länger störungsfrei durchgeführt werden kann. Die Steifigkeit der erfindungsgemäßen hochflexiblen Propylen-Ethylen-Copolymerisate liegt vorzugsweise unterhalb von 210 N/mm², insbesondere unterhalb von 130 N/mm² (G-Modul).

Aufgrund ihrer guten mechanischen und optischen Eigenschaften eignen sich solche hochflexiblen Copolymerisate insbesondere zur Herstellung von Folien, Fasern und von Formkörpern.

### Beispiel 1

Die Herstellung der erfindungsgemäßen, hochflexiblen Propylen-Ethylen-Copolymerisate erfolgte in zwei hintereinander geschalteten Rührautoklaven mit einem Nutzvolumen von jeweils 180 l in Anwesenheit von Wasserstoff als Molekulargewichtsregler. Beide Reaktoren enthielten ein bewegtes Festbett aus feinteiligem Polypropylen.

In den ersten Polymerisationsreaktor wurde bei einem Druck von 27 bar und einer Temperatur von 70°C gasförmiges Propylen eingeleitet und dieses kontinuierlich mit Hilfe eines Ziegler-Natta-Katalysators polymerisiert. Dabei wurden pro Stunde 1 g einer titanhaltigen Feststoffkomponente, 60 mmol Triethylaluminium und 6 mmol Dimethoxyisobutylisopropylsilan als Katalysatorbestandteile verwendet. Die mittlere Verweilzeit des Reaktionsgemisches betrug 2 Stunden. Bei diesem Verfahren wurden pro mmol der Aluminiumverbindung 0,4 kg Polypropylen erzeugt. Die titanhaltige Feststoffkomponente wurde nach folgendem Verfahren hergestellt.

Dazu versetzte man in einer ersten Stufe SiO₂, welches einen Teilchendurchmesser von 20 bis 45 µm, ein Porenvolumen von 1,75 cm³/g und eine Oberfläche von 320 m²/g aufwies, mit in n-Heptan gelöstem Butyl-octyl-magnesium, wobei pro Mol SiO₂ 0,3 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80°C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gew.-%igen Lösung von Titantetrachlorid in Ethylbenzol.

Danach wurde das Festprodukt durch Filtration vom Extraktionsmittel getrennt und solange mit n-Heptan gewaschen, bis dieses nur mehr 0,3 Gew.-% Titantetrachlorid erhielt.

Die darauf resultierende titanhaltige Feststoffkomponente enthielt 3,1 Gew.-% Titan, 7,5 Gew.-% Magnesium und 28,3 Gew.-% Chlor.

Das im ersten Reaktor gebildete Polypropylen wurde zusammen mit dem Katalysator in den zweiten Rührautoklaven überführt und dort dem Polymerisat bei einem Gesamtdruck von 20 bar, einer Temperatur von 70°C und einer mittleren Verweilzeit von 2 Stunden in Anwesenheit von 44 mmol Isopropanol ein Gemisch von Propylen und Ethylen hinzupolymerisiert. Das Verhältnis der Partialdrücke zwischen Propylen und Ethylen betrug dabei 2,33. Das Gewichtsverhältnis zwischen dem im ersten Reaktor gebildeten Polypropylen und dem im zweiten Reaktor entstandenen Copolymerisat lag bei 0,72. Bei der Polymerisation wurden im zweiten Reaktor pro mmol der Aluminiumkomponente 0,28 mmol Isopropanol verwendet. Die gesamten Reaktionsparameter können der nachfolgenden Tabelle 1 entnommen werden.

Dabei erhielt man ein Propylen-Ethylen-Copolymerisat mit einem Schmelzflußindex (HLMI) von 32 g/10 min., bei 230°C und 21,6 kg (nach DIN 53 735). Die mechanischen und optischen Eigenschaften der dabei erhaltenen hochflexiblen Propylen-Ethylen-Copolymerisate sind in der nachfolgenden Tabelle 2 aufgeführt.

### Beispiel 2 bis 7

Analog dem Beispiel 1 wurden mit Hilfe eines Ziegler-Natta-Katalysatorsystems Propylen und Ethylen polymerisiert, jedoch die Parameter Druck, Temperatur, Mengen der Katalysatorkomponenten, der Monomeren, des Isopropanols, sowie das Gewichtsverhältnis zwischen den in der ersten und den in der zweiten Polymerisationsstufe umgesetzten Monomeren entsprechend der Tabelle 1 verändert.

In dem Beispiel 4 wurde das erhaltene Propylen-Ethylen-Copolymerisat nach dessen Herstellung noch einem peroxidischen Molmassenabbau in einem gleichläufigen Doppelschneckenextruder (ZSK 40) der Firma Werner & Pfleiderer unterworfen. Dabei wurde das Propylen-Ethylen-Copolymerisat bei einem Durchsatz von 17 kg/ Stunde mit 790 bis 810 g/Stunde eines 3 gew.-%igen Peroxidbatches (3 Gew.-% 2,5-Dimethyl-2,5-di(tert.butyl)peroxid und 97 Gew.-% eines Propylenhomopolymerisatgrieses mit einem Schmelzflußindex von 20 g/10 min., bei 230°C und 21,6 kg, nach DIN 53 735) versetzt und bei 220°C bis zu einem Schmelzflußindex (MFI) von 2,2 g/10 min., bei 230°C und 2,16 kg, nach DIN 53 735 peroxidisch abgebaut.

In Beispiel 5 erfolgte der peroxidische Molmassenabbau analog dem Beispiel 4, aber bei einem Durchsatz des Copolymerisats von 12,5 kg/Stunde und mit einem 5 gew.-%igen Peroxidbatch (5 Gew.-% 2,5-Dimethyl-2,5-di(tert.butyl)peroxid und 95 Gew.-% des im Beispiel 4 verwendeten Propylenhomopolymerisatgrießes).

Die Eigenschaften der dabei erhaltenen hochflexiblen Propylen-Ethylen-Copolymerisate können der nachfolgenden Tabelle 2 entnommen werden.

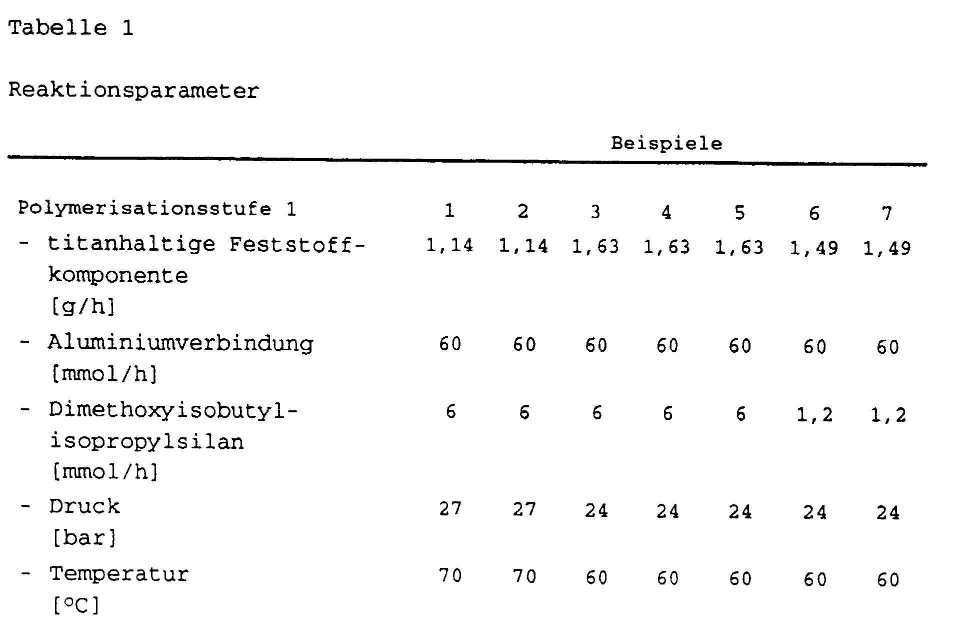

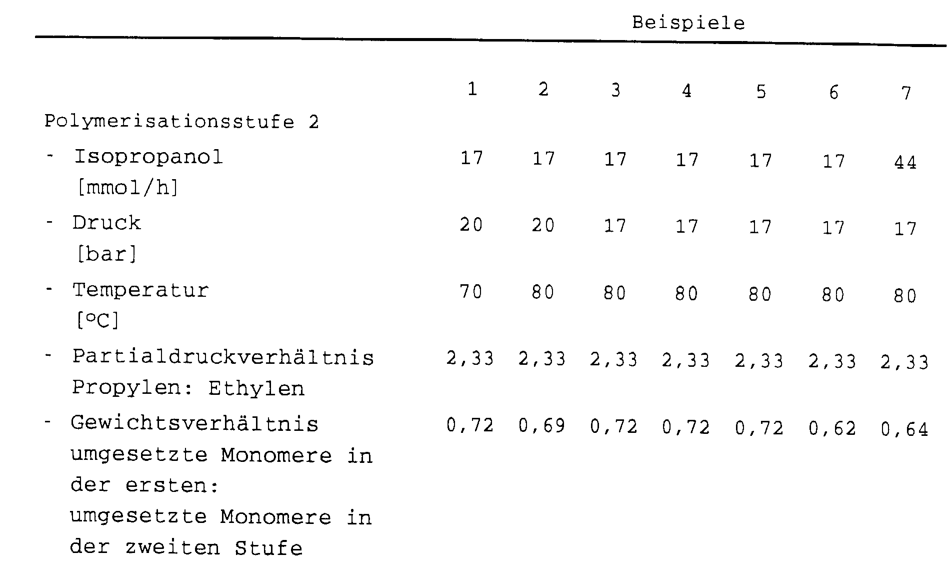

**Tabelle 2**

| Eigenschaften der erhaltenen Copolymerisate | | | | | | | |
|---|---|---|---|---|---|---|---|
| Beispiele | | | | | | | |
| | 1 | 2 | 3 | 4 | 5 | 6 | 7 |
| - Schmelzflußindex^{a} [g/10 min] | 32 | 28 | 20 | 2,2* | 9,5* | 32 | 23 |
| - Steifigkeit (G-Modul)^{b} [N/mm²] | 120 | 120 | 77 | 63 | 44 | 98 | 85 |
| | | | | | | | |
| - Kerbschlagzähigkeit^{c} [kJ/m²] | ohne Bruch | ohne Bruch | ohne Bruch | ohne Bruch | ohne Bruch | ohne Bruch | ohne Bruch |
| - Weißbruch^{d} [mm] | 0,0 | 0,0 | 0,0 | 0,0 | 0,0 | 0,0 | 0,0 |
| - Laufzeit ohne Belagbildung^{e} [h] | >8 | >8 | >8 | >8 | >8 | >8 | >8 |

| | | | | | | | |
|---|---|---|---|---|---|---|---|
| a HLMI, nach DIN 53 735, bei 230°C und unter einem Gewicht von 2,16 kg | | | | | | | |
| a* MFI, nach DIN 53 735, bei 230°C und unter einem Gewicht von 2,16 kg | | | | | | | |
| b nach DIN 53 445 | | | | | | | |
| c nach DIN 53 453, bei -40°C | | | | | | | |
| d bei 60°C, Beschreibung folgt unten | | | | | | | |
| e Laufzeit ohne Belagbildung, in Stunden | | | | | | | |

### Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250°C und einer Werkzeugoberflächentemperatur von 30°C spritzgegossen.

Die Prüfung erfolgte bei einer Temperatur von 60°C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

Die erfindungsgemäßen hochflexiblen Propylen-Ethylen-Copolymerisate zeichnen sich insbesondere durch eine sehr hohe Kerbschlagzähigkeit und eine deutlich verringerte Neigung zum Weißbruch aus.

## Patentansprüche

1. Propylen-Ethylen-Copolymerisate mit hohem Kautschukgehalt und einem Schmelzflußindex (HLMI), gemessen bei 230°C und 21,6 kg, von 0,2 bis 50 g/10 min, erhältlich durch zweistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält, wobei man
in einer ersten Polymerisationsstufe bei einem Druck von 20 bis 27 bar, einer Temperatur von 50 bis 70°C und einer mittleren Verweilzeit des Reaktionsgemisches von 0,5 bis 5 Stunden Propylen polymerisiert und anschließend
in einer zweiten Polymerisationsstufe bei einem Druck von 5 bis 30 bar, wobei dieser Druck wenigstens 2 bar unter dem Druck der ersten Polymerisationsstufe liegt, einer Temperatur von 60 bis 100°C und einer mittleren Verweilzeit des Reaktionsgemisches von 0,5 bis 5 Stunden, dem aus der ersten Polymerisationsstufe ausgebrachten Polymerisat ein Gemisch aus Propylen und Ethylen hinzupolymerisiert, dabei das Verhältnis der Partialdrücke zwischen Propylen und Ethylen im Bereich von 0,5 : 1 bis 5 : 1 einstellt, das Gewichtsverhältnis zwischen den in der ersten und den in der zweiten Polymerisationsstufe umgesetzten Monomeren so bemißt, daß es im Bereich von 0,9 : 1 bis 0,4 : 1 liegt, die Polymerisation in der zweiten Polymerisationsstufe in Gegenwart eines C₁-C₈-Alkanols vornimmt und in der zweiten Polymerisationsstufe keine zusätzliche, als Cokatalysator dienende Aluminiumverbindung und keine zusätzliche, als Katalysator dienende titanhaltige Feststoffkomponente einbringt.

2. Propylen-Ethylen-Copolymerisate nach Anspruch 1, erhältlich nach einem Verfahren, wobei man die Polymerisation in der zweiten Polymerisationsstufe bei Temperaturen von 70 bis 90°C durchführt.

3. Propylen-Ethylen-Copolymerisate nach Anspruch 1 oder 2, erhältlich nach einem Verfahren, wobei man das Gewichtsverhältnis zwischen den in der ersten und den in der zweiten Polymerisationsstufe umgesetzten Monomeren so bemißt, daß es im Bereich von 0,8 : 1 bis 0,5 : 1 liegt.

4. Propylen-Ethylen-Copolymerisate nach den Ansprüchen 1 bis 3, erhältlich nach einem Verfahren, wobei man die Polymerisation in der zweiten Polymerisationsstufe in Gegenwart eines C₁-C₄-Alkanols vornimmt.

5. Propylen-Ethylen-Copolymerisate nach den Ansprüchen 1 bis 4, erhältlich nach einem Verfahren, wobei man das aus der zweiten Polymerisationsstufe erhaltene Copolymerisat noch einem peroxidischen Molmassenabbau unterwirft.

6. Propylen-Ethylen-Copolymerisate nach Anspruch 5, wobei man den peroxidischen Molmassenabbau in einem Extruder bei Temperaturen von 170 bis 300°C durchführt.

7. Verfahren zur Herstellung von Propylen-Ethylen-Copolymerisaten gemäß den Ansprüchen 1 bis 6 in einem bewegten Festbett, wobei man aus der Gasphase heraus zunächst in einer ersten Polymerisationsstufe bei einem Druck von 20 bis 27 bar, einer Temperatur von 50 bis 70°C und einer mittleren Verweilzeit des Reaktionsgemisches von 0,5 bis 5 Stunden, mit Hilfe eines Ziegler-Natta-Katalysatorsystems, das neben einer titanhaltigen Feststoffkomponente noch als Cokatalysator eine Aluminiumverbindung enthält, Propylen polymerisiert und in einer zweiten Polymerisationsstufe bei einem Druck von 5 bis 30 bar, wobei dieser Druck wenigstens 2 bar unter dem Druck der ersten Polymerisationsstufe liegt, und einer mittleren Verweilzeit des Reaktionsgemisches von 0,5 bis 5 Stunden, dem aus der ersten Polymerisationsstufe ausgebrachten Polymerisat ein Gemisch aus Ethylen und Propylen hinzupolymerisiert, dadurch gekennzeichnet, daß man die Polymerisation in der zweiten Polymerisationsstufe bei einer Temperatur von 60 bis 100°C und in Gegenwart eines C₁-C₈-Alkanols vornimmt, das Gewichtsverhältnis zwischen den in der ersten und den in der zweiten Polymerisationsstufe umgesetzten Monomeren so bemißt, daß es im Bereich von 0,9 : 1 bis 0,4 : 1 liegt und in der zweiten Polymerisationsstufe keine zusätzliche, als Cokatalysator dienende Aluminiumverbindung und keine zusätzliche, als Katalysator dienende titanhaltige Feststoffkomponente einbringt.

8. Folien, Fasern und Formkörper aus den Propylen-Ethylen-Copolymerisaten nach den Ansprüchen 1 bis 6.

## Claims

1. A propylene/ethylene copolymer having a high rubber content and a melt flow index (HLMI), measured at 230°C and 21.6 kg, of from 0.2 to 50 g/10 min, obtainable by two-stage polymerization from the gas phase in an agitated fixed bed by means of a Ziegler-Natta catalyst system which, in addition to a titanium-containing solid component, also contains an aluminum compound as a cocatalyst, wherein,
in a first polymerization stage, propylene is polymerized at from 20 to 27 bar and from 50 to 70°C and during an average residence time of the reaction mixture of from 0.5 to 5 hours and then,
in a second polymerization stage, a mixture of propylene and ethylene is polymerized with the polymer discharged from the first polymerization stage, at from 5 to 30 bar, this pressure being at least 2 bar below the pressure of the first polymerization stage, and at from 60 to 100°C and during an average residence time of the reaction mixture of from 0.5 to 5 hours, the ratio of the partial pressure of propylene to that of ethylene is brought within the range from 0.5:1 to 5:1, the weight ratio of the monomers reacted in the first polymerization stage to those reacted in the second polymerization stage is from 0.9:1 to 0.4:1, the polymerization in the second polymerization stage is carried out in the presence of a C₁-C₈-alkanol and no additional aluminum compound serving as a cocatalyst and no additional titanium-containing solid compound serving as a catalyst are introduced in the second polymerization stage.

2. A propylene/ethylene copolymer as claimed in claim 1, obtainable by a process in which the polymerization in the second polymerization stage is carried out at from 70 to 90°C.

3. A propylene/ethylene copolymer as claimed in claim 1 or 2, obtainable by a process in which the weight ratio of the monomers reacted in the first polymerization stage to those reacted in the second polymerization stage is from 0.8:1 to 0.5:1.

4. A propylene/ethylene copolymer as claimed in any of claims 1 to 3, obtainable by a process in which the polymerization in the second polymerization stage is carried out in the presence of a C₁-C₄-alkanol.

5. A propylene/ethylene copolymer as claimed in any of claims 1 to 4, obtainable by a process in which the copolymer obtained from the second polymerization stage is furthermore subjected to a molecular weight reduction by means of a peroxide.

6. A propylene/ethylene copolymer as claimed in claim 5, wherein the molecular weight reduction by means of a peroxide is carried out in an extruder at from 170 to 300°C.

7. A process for the preparation of a propylene/ethylene copolymer as claimed in any of claims 1 to 6 in an agitated fixed bed, propylene first being polymerized from the gas phase in a first polymerization stage at from 20 to 27 bar and from 50 to 70°C and during an average residence time of the reaction mixture of from 0.5 to 5 hours with the aid of a Ziegler-Natta catalyst system which, in addition to a titanium-containing solid component, also contains an aluminum compound as a cocatalyst, and, in a second polymerization stage, a mixture of ethylene and propylene being polymerized with the polymer discharged from the first polymerization stage, at from 5 to 30 bar, this pressure being at least 2 bar below the pressure of the first polymerization stage, and during an average residence time of the reaction mixture of from 0.5 to 5 hours, wherein the polymerization in the second polymerization stage is carried out at from 60 to 100°C and in the presence of a C₁-C₈-alkanol, the weight ratio of the monomers reacted in the first polymerization stage to those reacted in the second polymerization stage is from 0.9:1 to 0.4:1 and no additional aluminum compound serving as a cocatalyst and no additional titanium-containing solid compound serving as a catalyst are introduced in the second polymerization stage.

8. A film, fiber or molding comprising a propylene/ethylene copolymer as claimed in any of claims 1 to 6.

## Revendications

1. Copolymères du propylène et de l'éthylène à teneur en caoutchouc élevée et possédant un indice d'écoulement à l'état fondu (HLMI), mesuré à 230°C et sous 21,6 kg, de 0,2 à 50 g/10 min., que l'on peut obtenir par la polymérisation en deux stades, à partir de la phase gazeuse dans un lit fixe mobilisé, à l'aide d'un système catalytique de Ziegler-Natta, qui contient, outre un composant solide contenant du titane, encore un composé de l'aluminium, à titre de cocatalyseur, où,
au cours d'un premier stade de polymérisation, on polymérise le propylène, à une température de 50 à 70°C, sous une pression de 20 à 27 bars et avec une durée de séjour moyenne du mélange réactionnel de 0,5 à 5 heures et, ensuite,
au cours d'un second stade de polymérisation, on incorpore sous polymérisation au polymère sortant du premier stade de polymérisation, un mélange de propylène et d'éthylène, à une température de 60 à 100°C, sous une pression de 5 à 30 bars, où cette pression est inférieure d'au moins 2 bars à la pression qui règne dans le premier stade de polymérisation et avec une durée de séjour moyenne du mélange de réaction de 0,5 à 5 heures, ce faisant, on règle le rapport de la pression partielle entre le propylène et l'éthylène dans la plage de 0,5:1 à 5:1, on mesure le rapport pondéral entre les monomères convertis dans le premier stade et dans le second stade de polymérisation en une manière telle qu'il se situe dans la plage de 0,9:1 à 0,4:1, on entreprend la polymérisation dans le second stade de polymérisation, en présence d'un alcanol en C₁ à C₈ et, dans le second stade de polymérisation, on n'introduit ni composé d'aluminium supplémentaire servant de cocatalyseur, ni de composant solide supplémentaire contenant du titane et servant de catalyseur.

2. Copolymères du propylène et de l'éthylène suivant la revendication 1, que l'on peut obtenir selon un procédé conformément auquel on entreprend la polymérisation dans le second stade de polymérisation, à des températures qui fluctuent de 70 à 90°C.

3. Copolymères du propylène et de l'éthylène suivant la revendication 1 ou 2, que l'on peut obtenir conformément à un procédé au cours duquel on mesure le rapport pondéral entre les monomères convertis dans le premier stade de polymérisation et dans le second stade de polymérisation, en une mesure telle qu'il se situe dans la plage de 0,8:1 à 0,5:1.

4. Copolymères du propylène et de l'éthylène suivant l'une quelconque des revendications 1 à 3, que l'on peut obtenir par un procédé conformément auquel on entreprend la polymérisation dans le second stade de polymérisation, en présence d'un alcanol en C₁ à C₄.

5. Copolymères du propylène et de l'éthylène suivant l'une quelconque des revendications 1 à 4, que l'on peut obtenir par un procédé conformément auquel on soumet encore le copolymère obtenu dans le second stade de polymérisation à une dégradation du poids moléculaire peroxydique.

6. Copolymères du propylène et de l'éthylène suivant la revendication 5, où l'on entreprend la dégradation de la masse moléculaire peroxydique dans une extrudeuse à des températures de 170 à 300°C.

7. Procédé de préparation de copolymères du propylène et de l'éthylène suivant l'une quelconque des revendications 1 à 6, dans un lit mobilisé, conformément auquel on polymérise du propylène, à partir de la phase gazeuse d'abord dans un premier stade de polymérisation, à une température de 50 à 70°C, sous une pression de 20 à 27 bars et avec une durée de séjour moyenne du mélange de réaction de 0,5 à 5 heures, à l'aide d'un système catalytique de Ziegler-Natta, qui contient outre un composant solide contenant du titane, encore un composé d'aluminium, à titre de cocatalyseur et, au cours d'un second stade de polymérisation, on incorpore par polymérisation au polymère sortant du premier stade de polymérisation, un mélange d'éthylène et de propylène, sous une pression de 5 à 30 bars, où cette pression est inférieure d'au moins 2 bars à la pression qui règne dans le premier stade de polymérisation et avec une durée de séjour moyenne du mélange réactionnel de 0,5 à 5 heures, caractérisé en ce que l'on entreprend la polymérisation dans le second stade de polymérisation, à une température de 60 à 100°C et en présence d'un alcanol en C₁ à C₈, on mesure le rapport pondéral entre les monomères convertis ou entrés en réaction dans le premier stade et dans le second stade de polymérisation, en une manière telle qu'il se situe dans la plage de 0,9:1 à 0,4:1 et, dans le second stade de polymérisation, on n'introduit ni composé d'aluminium supplémentaire servant de cocatalyseur, ni composant solide contenant du titane supplémentaire et servant de catalyseur.

8. Feuilles, fibres et articles moulés en copolymères du propylène et de l'éthylène suivant l'une quelconque des revendications 1 à 6.
